Europäisches Patentamt

European Patent Office

Office européen des brevets

(11) Publication number: **0 224 291**
**A1**

(12) # EUROPEAN PATENT APPLICATION

(21) Application number: **86201943.7**

(51) Int. Cl.4: **G06F 13/40**

(22) Date of filing: **07.11.86**

(30) Priority: **28.11.85 IT 6800085**

(43) Date of publication of application:
**03.06.87 Bulletin 87/23**

(84) Designated Contracting States:
**AT BE CH DE ES FR GB GR LI NL SE**

(71) Applicant: **Aversa, Carmine**
**Via Rivoli, 11**
**I-10090 Rosta Torino(IT)**

(72) Inventor: **Aversa, Carmine**
**Via Rivoli, 11**
**I-10090 Rosta Torino(IT)**

(74) Representative: **Lotti, Giorgio**
**c/o Ing. Barzanò & Zanardo Milano S.p.A. Via**
**Cernaia 20**
**I-10122 Torino(IT)**

(54) **Device for the transmission of messages without the use of cables from keyboard to a programmable sign-board.**

(57) A device for the transmission of messages without the use of cables, from an alphanumeric keyboard, and respective apparatus for coding and transmitting, to a corresponding receiving and writing apparatus, the messages onto a screen having a matrix of light-emitting diodes (or lamps), of a programmable sign-board situated remote from said transmission apparatus, in which the transmission of messages from the keyboard to the receiving and writing apparatus is performed without the use of cables by means of a selector-coder and transmitter of characters located on the keyboard, and by means of a corresponding apparatus which receives and decodes said characters, cooperating with the writing apparatus provided on the screen.

# DEVICE FOR THE TRANSMISSION OF MESSAGES WITHOUT THE USE OF CABLES FROM A KEYBOARD TO A PROGRAMMABLE SIGN-BOARD.

In the field of the promotion of the sales or in that of the advertisement of messages of any type it becomes more and more important to entrust the visualization of the advertising message to the means which can easier and more efficiently attract the attention of the persons which are the potential target to which the message is directed.

Among the advertising means, a rapid diffusion is obtained, thanks to their considerable visual striking capacity, by the programmable luminous sign-boards. These sing-boards are composed of a screen having a matrix of light-emitting diodes or, or lamps in case of sign-boards of larger dimensions, generally elongated in shape, on which , in accordance with the particular requirements, the advertizing · messages may be visualized in the form as moving writings on the screen. The user has the possibility to vary at will the contents of the advertising message by simply using a keyboard connected to the screen which, being used in the manner of the keyboard of a typewriter, allows to writing any message whatsoever, up to a certain length.

In the known model, the keyboard and the screen are connected to one another by a cable, and this gives rise to problems; in fact, the user of this type of sign-board will be compelled to position the sign-board in a position in which the effect is more efficient and the presence of the cable, of limited length, hinders the exposition of the screen at high located positions or anyway gives rise to encumberment and hindrance; we recall that the cable connects the screen and the kayboard which therefore should be left even in positions where it can be touched or struck.

The device according to the present invention offers the possibility to obviate such disadvantage inasmuch as it permits the transmission of advertising messages, without the use of cables, from the keyboard to the screen by means of a transmitting apparatus connected to the keyboard and cooperating with this latter, and with the aid of a corresponding receiving apparatus connected to the screen and cooperating with this latter.

The advantages obtained by the present invention are evident; in fact, thanks to the elimination of the use of the cable, the mutual positioning of the screen and the keyboard are independent, within of the limits of the adopted particular type of transmission without cables; in the way, the use of the apparatus becomes much more flexible and convenient .

To attain thes and other objects, which will be better understood from the following description, the invention proposes to provide a device for the transmission of messages from an alphanumeric keyboard, and a respective coding and transmitting apparatus, to a corresponding apparatus for receiving and writing the messages on a screen provided with a matrix of light-emitting diodes or lamps, of a programmable sign-board, situated at a distance from said transmitting apparatus, characterized in that the transmission of the messages from the keyboard to the receiving and writing apparatus is carried out without the use of cables by means of a selector-coder and transmitter of characters located on those of the keyboard, and of a corresponding spparatus , which receives and decodes said characters and cooperates with the writing apparatus on the screen.

The device according to the invention will now be described in an embodimend given by way of a preferred but certainly not limiting example, with reference to the annexed block diagram.

The device according to the invention is composed of a scanning digital counter 1 with two outgoing multiple lines 2 and 3. The first line 2 is directed towards the three blocks 4, 5 and 6 which are a decoder 4, a keyboard for electronic apparatuse 5 and a coder 6, respectively. The second line 3 is directed towards the block 7 which is a temporary memory block from which a multiple line goes out towards a serial character generator 8.

A single line goes out from 8 and enters a pulse generator module 9 connected to a booster 10 which in its turn, is connected to an infrared ray emitter member 11.

An infrared ray receiver member 12 is connected to a pulse amplifier 13 whose output is directed to a low-pass filter 14.

The operation of the device according to the invention will now be described with referenceto the annexed block diagram.

The digital counter 1 carries out at regular intervals of time the scanning of all the columns of the keyboard and sequentially sends on the multiple line 2 the binary-coded data which locate the columns: on the other multiple line 3 the counter sends the same representation to the temporary memory 7. The number which arrives from the line 2 enters the decoder 4 whose output, still on a multiple line, serves to identify on the keyboard the columns of characters, instant by instant, according to the scanning of the counter which is involved in the selection of a character; said line enters a keyboard 5 of known type, in which the scanning of the columns of characters takes place according to the period of time imposed by the counter 1; at the moment of pressing down a key there is selected not only the column, but also a line; the character defined by the articular line and column will be emitted by the decoder 6 in a binary representation and will be sent on a multiple line to the temporary memory block.

Entering the block 7 are the lines coming from the scanning counter 1 and from the decoder 6; the binary represéntation of the selected character will then remain in the memory block 7 for a period of time determined by the scanning rapidity of the counter 1, the memory 7 being periodically cleared by the counter 1.

The contents of the memory 7 is sent into the character serial generator 8 which transforms the binary representation of the character, which up to this moment was "travelling" in parallel in a particular wave-form inherent to the selected character.

Thsi wave-form will now "travel" on a single line and will enter the block 9 in which it will modulate a train of relatively high frequency pulses generated within said block 9.

This step is necessary to protect the signal from subsequent interferences of ambient light during the transmission; the signal passes then into the booster 10 where it is amplified to an extent adapted to the subsequent passage into the infrared ray emitter 11 which gives rise to the effective remote transmission of the character.

The infrared ray receiver 12 receives the signal and sends it to the pulse amplifier 13 in order to restore the amplitude of the pulses at the level required for the correct operation of the following electronic parts.

The modulated train of pulses passes then into the low-pass filter 14 which will eliminate the high frequency component of the signal; at the outlet of the low-pass filter 14 we will then have the representation of the character selected on the keyboard 5, which will then be utilized in the remaining part of the apparatus.

Instead of the infrared ray transducers of the electronic parts necessary for the operation, it is advantageously possible to use receiving and transmitting radio-wave antennae and respective circuits of piloting the same, or ultrasonant transducers, still with the respective piloting circuits, the parts of selection, coding and decoding of the character pressed down on the keyboard remaining unalterated; it is thus possible to obtain other efficient realizations of the device, which will as well avoid the use of connection cables between the keyboard and the sign-board, which realizzations, anyhow, are included within the scope of the invention and are also protected by the following Claims.

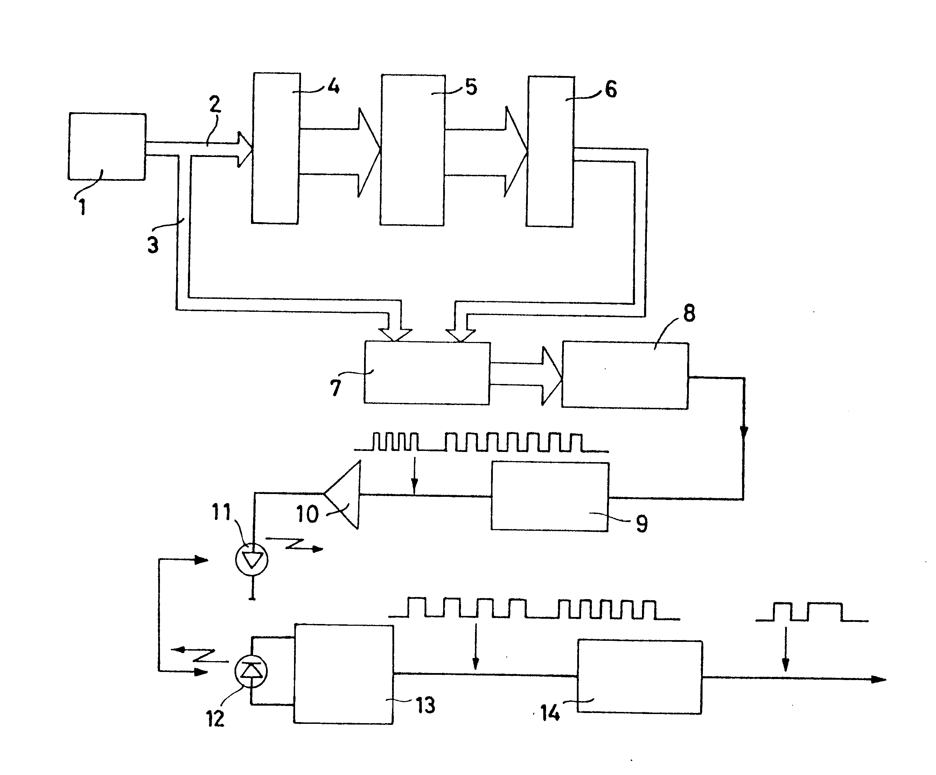

## Claims

1.-A device for the transmission of messages from an alphanumeric keyboard, and a respective coding and transmistting apparatus, to a corresponding apparatus for receiving and writing the messages on a screen provided with a matrix of light-emitting diodes or lamps, of a programmable sign-board, situated at a distance from said transmitting apparatus, characterized in that the transmission of the messages from the keyboard to the receiving and writing apparatus is carried out without the use cables by means of a selector-coder and transmitter of characters identified on those of the keyboard, and of a corresponding apparatus, which receives and decodes said characters and cooperates with the writing apparatus on the screen.

2.-A device as claimed in Claim 1, characterized in that the transmission and the reception of the message are performed by means of infrared ray transducers.

3.-A device as claimed in Claim 1, characterized in that the keyboard, the selector, coding and transmitting apparatus are lodged in a single container.-

4. A device as claimed in Claim 1, characterized in that the receiving and decoding apparatus of the receiver is incorporated into the writing apparatus of the screen.

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | US-A-3 838 412 (C.M. JONES) * Column 1, lines 34-44; column 5, line 61 - column 6, line 13 * | 1 | G 06 F 13/40 |
| Y | | 1-4 | |
| Y | IBM TECHNICAL DISCLOSURE BULLETIN, vol. 20, no. 10, March 1978, pages 4250-4251, New York, US; J.H. MORRISEY: "Typewriter with detached portable keybord" * Whole document * | 1-4 | |
| A | WO-A-8 001 860 (AMP INC.) * Page 1, paragraph 1 * | 1 | |

TECHNICAL FIELDS SEARCHED (Int. Cl.4)

G 06 F
G 09 F

The present search report has been drawn up for all claims

| Place of search | Date of completion of the search | Examiner |
|---|---|---|
| THE HAGUE | 05-03-1987 | JAFFAR R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82